# EUROPEAN PATENT SPECIFICATION

(11) **EP 1 108 528 B1**
(45) Date of publication and mention of the grant of the patent: **18.10.2006**
(21) Application number: 00126608.9
(22) Date of filing: 04.12.2000
(51) Int. Cl.: B32B 1/08, F16L 11/08, B32B 25/14, F16L 11/04

(54) **Hose construction having inner core of hydrogenated nbr**
Schlauch mit innenliegender HNBR-Lage
Tuyau flexible avec une couche interne en résine NBR hydrogénée

(30) Priority: 13.12.1999 US 459687
(43) Date of publication of application: 20.06.2001
(73) Proprietor: THE GOODYEAR TIRE & RUBBER COMPANY, Akron, Ohio 44316-0001 (US)
(72) Inventor: Ainsworth, Carol Lynn, Sun Prairie, WI 53590 (US)
(74) Representative: Kutsch, Bernd

(56) References cited:
- EP-A- 0 739 712
- EP-A- 1 048 453
- GB-A- 2 174 398
- US-A- 4 575 534
- US-A- 4 734 305
- PATENT ABSTRACTS OF JAPAN vol. 018, no. 543 (M-1687), 17 October 1994 (1994-10-17) & JP 06 190975 A (HITACHI CABLE LTD), 12 July 1994 (1994-07-12)
- PATENT ABSTRACTS OF JAPAN vol. 1998, no. 08, 30 June 1998 (1998-06-30) & JP 10 061838 A (YOKOHAMA RUBBER CO LTD:THE), 6 March 1998 (1998-03-06)
- PATENT ABSTRACTS OF JAPAN vol. 014, no. 509 (C-0776), 7 November 1990 (1990-11-07) & JP 02 210075 A (YOKOHAMA RUBBER CO LTD:THE), 21 August 1990 (1990-08-21)

## Description

### Background of the Invention

A major proportion of gasoline fuel hose presently employed in automobile applications is a multi-layered structure. The innermost tubular layer of the hose is formed of an elastomeric material intended to keep the fluid in the hose. Located between the inner core and the outer elastomeric cover is a barrier layer. In other fuel hoses, the barrier layer is the innermost tubular layer (known as a veneer hose), with the elastomeric material being located outside of such barrier layer. Diesel systems do not have a permeation requirement because diesel fuel is not as volatile as gasoline. Therefore, it does not need a barrier layer, however, the hose must still be resistant to diesel fuel.

EP-A-1048453 describes a hose having a rubber layer containing HNBR having a Mooney viscosity ranging from 60 to 120, a layer of tensioned reinforcement material, and an elastic cover.

JP-A-06-190975 describes a hose according to the preamble of claim 1.

### Summary of the Invention

There is disclosed a hose according to claim 1.

### Brief Description of the Drawings

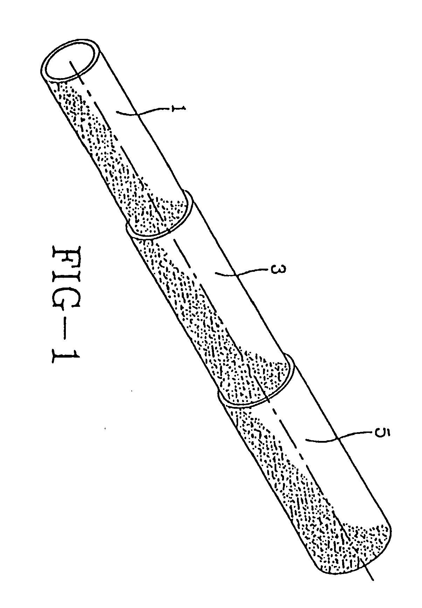

Figure 1 is a perspective view of a hose according to the invention.

### Detailed Description of the Invention

When a hose, for example, as shown in Figure 1 is produced, the inner core (1) or tubular core of the present invention is formed from hydrogenated acrylonitrile butadiene (NBR) rubber.

Various hydrogenated acrylonitrile butadiene rubbers may be used. For example, the Mooney viscosity (M/L 1+4 @ 100°C) and the acrylonitrile content may vary depending on the use of the hose. Suitable examples of hydrogenated acrylonitrile butadiene rubber may have a Mooney viscosity as low as 60 to as high as 120. The acrylonitrile content may range from as low as 15 percent to as high as 60 percent. The residual double bonds may range from 0 to 20 percent. Representative acrylonitrile rubbers that are commercially available from Nippon Zeon Company include a family of products marketed under the Zetpol^{™} line, such as Zetpol^{™} 1020 (Mooney 78 and acrylonitrile content 45 percent), Zetpol^{™} 2010 (Mooney 85 and acrylonitrile content 37 percent) and Zetpol^{™} 2020 (Mooney 78 and acrylonitrile content 37 percent). Another family of commercially available hydrogenated acrylonitrile-butadiene rubbers are marketed under the designation Therban^{™} by Bayer. Representative examples of various grades of the Therban^{™} line include Therban^{™} C 3446 (acrylonitrile content 34 wt %, 58 Mooney viscosity and 4 percent residual double bonds), Therban^{™} C 3467 (acrylonitrile content 34 percent, 68 Mooney viscosity, 5.5 percent residual double bonds), Therban^{™} B 3850 (acrylonitrile content 36 percent, 87 Mooney viscosity and 2 percent residual double bonds), Therban^{™} XO 534B (acrylonitrile content 36 percent, 66 Mooney viscosity, 2 percent residual double bonds), Therban^{™} C 4550 (acrylonitrile content 43 percent, 95 Mooney viscosity and 5.5 percent residual double bonds) and Therban^{™} XIV 532C (acrylonitrile content 43 percent, 70 Mooney viscosity and 5.5 percent residual double bonds).

In addition to the above, the hydrogenated NBR rubber composition may contain conventional additives including reinforcing agents, fillers, peptizing agents, pigments, stearic acid, accelerators, sulfur vulcanizing agents, antiozonants, antioxidants, processing oils, activators, initiators, plasticizers, waxes, prevulcanization inhibitors, extender oils and the like. Representative of reinforcing agents include carbon black, which is typically added in amounts ranging from 5 to 200 parts by weight based on 100 parts by weight of total rubber (phr). Preferably, carbon black is used in amounts ranging from 35 to 120 phr. Typical carbon blacks that are used include N110, N330, N332, N472, N550, N630, N642, N650, N762, N770, N907, N908, N990 and N991. The preferred carbon blacks have an average particle size of from 30 to 500 nm. In those instances, when the hose will be used to convey flammable fluids, electrically conductive blacks may be used. Noncarbon black fillers which may be used include talc, clay, calcium carbonate, silica and the like. Noncarbon black fillers may be used in an amount ranging from 5 to 150 phr. However, it has been found that the presence of such fillers may be detrimental to bleeding of hose components. Therefore, in a preferred embodiment, the rubber layer does not contain noncarbon black fillers. Oil dispersions containing such fillers may also be used. Organosilanes such as 3,3' bis(triethoxysilylpropyl) tetrasulfide may be used in amounts ranging from .1 to 20 phr. Suitable examples of such organosilanes are disclosed in US-A- 4,128,438. Representative of the antidegradants which may be in the rubber composition include microcrystalline wax, paraffinic wax, monophenols, bisphenols, thiobisphenols, polyphenols, hydroquinone derivatives, phosphites, phosphate blends, thioesters, naphthylamines, diphenol amines, substituted and unsubstituted diaryl amine derivatives, diarylphenylenediames, para-phenylene diamines, quinolines and blended amines. Antidegradants are generally used in an amount ranging from 0.1 phr to 10 phr with a range of from 2 to 6 phr being preferred. Representative of a peptizing agent that may be used is pentachlorophenol which may be used in an amount ranging from 0.1 phr to 0.4 phr with a range of from 0.2 to 0.3 phr being preferred. Representative of processing oils which may be used in the rubber composition of the present invention include activated dithio-bisbenzanilide, poly-para-dinitrosobenzene, xylyl mercaptans, aliphatic-naphthenic aromatic resins, polyethylene glycol, petroleum oils, ester plasticizers, vulcanized vegetable oils, pine tar, phenolic resins, synthetic oils, petroleum resins, polymeric esters and rosins. These processing oils may be used in a conventional amount ranging from 0 to 140 phr. Representative of an initiators that may be used is stearic acid. Initiators are generally used in a conventional amount ranging from 1 to 4 phr. Additional additives which may be used as part of the cure package include calcium oxide and zinc oxide. However, it has been found that the presence of magnesium oxide in the rubber layer may be detrimental to bleeding of the hose components. Therefore, the rubber layer does not contain magnesium oxide. These additives are conventionally used in amounts ranging from 0.1 to 25 phr.

The elastomeric compositions for use in the inner core can be crosslinked by various peroxide containing curing agents. Curing agents which may be employed in the compositions of the invention include, for example, di-tertbutyl peroxide, dicumyl peroxide, benzoyl peroxide, 2,4-dichlorobenzol peroxide, t-butyl-cumyl peroxide, t-butyl perbenzoate, t-butyl peroxide, t-butylperoxy (2-ethyl hexanoate), 2,5-dimethyl-2,5-di(benzoylperoxy)-hexane, benzoyl peroxide, 2,5-dimethyl-2,5-(t-butyl peroxy)-hexane, 1,1-ditert-butyl peroxy-3,3,5-trimethyl cyclohexane, 4,4-ditert-butyl peroxy n-butyl valerate and n-butyl-4,4-bis(t-butyl peroxy) valerate. Additional curing agents which may be employed include diacyl or dialkyl peroxides such as á,á'-bis(t-butylperoxy)-isopropylbenzene, 2,5-Dimethyl-2,5-di(t-butylperoxy) hexane, Di-t-butyl peroxide, 2,5-Dimethyl-2,5-di-(t-butylperoxy)hexyne-3, lauroyl peroxide, t-butyl hydroperoxide, t-amyl hydroperoxide, cumene hydroperoxide, t-butyl perbenzoate, t-butyl peroxide, t-butylperoxy (2-ethyl hexanoate), 2,5-dimethyl-2,5-di (benzoylperoxy)-hexane and benzoyl peroxide. All of the above curing agents are commercially available.

The amount of curing agent that is used may vary. Generally speaking, the level will range of from 0.1 to 10 phr (based on active parts of peroxide). Preferably, the level ranges from 1.8 to 3.0 phr.

Minor amounts of the zinc salt unsaturated carboxylic acid ester grafted hydrogenated nitrile butadiene elastomer may be substituted with conventional hydrogenated acrylonitrile butadiene rubbers. For example, from 0 to 30 parts by weight of the total 100 parts by weight of the composition may be HNBR. Crosslinking co-agents may be added to the rubber composition. Representative examples of such co-agents include triallyl cyanurate, triallyl isocyanurate, triallyl phosphate, triallyl trimellitate, diallylidene pentaerithryte, diallyl terephthalate, tetraallyl oxyethane, triallyl citrate, acetyl triallyl oxyethane, acetyl triallyl citrate, di-, tri-, tetra- and penta-functional acrylates, di-, tri-, tetra- and penta-functional methacrylates, n,n'-m-phenylene-dimaleimide, 1,2-cis-polybutadiene and mixtures thereof. Typical amounts of such co-agents range from 1 to 20 phr. Preferred ranges of co-agents include of from 2 to 10 phr.

The mixing of the rubber composition for use in the inner core can be accomplished by methods known to those having skill in the rubber mixing art. For example, the ingredients may be mixed in one stage but are typically mixed in at least two stages, namely at least one non-productive stage followed by a productive mix stage. The final curatives including vulcanizing agents are typically mixed in the final stage which is conventionally called the "productive" mix stage in which the mixing typically occurs at a temperature, or ultimate temperature, lower than the mix temperature(s) than the preceding non-productive mix stage(s).

Curing of the rubber composition is generally carried out at conventional temperatures ranging from 160°C to 190°C. Preferably, the curing is conducted at temperatures ranging from 170°C to 180°C.

Referring to Figure 1, the inner core 1 may be of the above-described hydrogenated NBR with the reinforcement layer 3 directly adhered thereto.

The layer of hydrogenated NBR layer may be formed by extrusion methods known to those skilled in the art. The thickness of this layer is important as excessively thin wall thicknesses or excessively thick wall thicknesses present flexibility or kinking problems or coupling compatibility problems of the final hose composite. It is believed that the inside diameter of the inner core 1 made from the hydrogenated NBR should range from 3 mm to 100 mm. Preferably, the inside diameter of the inner core will range from 4 mm to 75 mm. The wall thicknesses of the inner core 1 should range from 0.1 mm to 8.0 mm, with a range of from 0.5 mm to 4.0 mm being preferred.

The second feature of the present invention is a layer of tensioned reinforcement material 3 added on top of or disposed directly against the inner core 1. Such reinforcement 3 is known to those skilled in the art and may consist of spiraled, knitted or braided yarn. Such reinforcements are typically derived from polyester, nylon, rayon or aramid cords. The reinforcement 3 is preferably spirally wound about the first layer under sufficient tension to improve the strength of the hose structure. The reinforcement layer 3 is preferably spirally wrapped at angles such that the flexing of the hose will not result in collapse or kinking. An angle such as from 0 to 89.9° with respect to the centerline of the hose may be used. Most preferably, a neutral angle of 54° 73' or below is used for the spiral wraps.

The last element required in the hose of the present invention is an outer cover 5. This outer cover is made from an elastomeric material. The cover 5 is extruded over the reinforcement layer 3. The elastomers which may be used to form the cover for the hose of the present invention include those known to those skilled in the art such as chlorosulfonated polyethylene, chlorinated polyethylene, acrylonitrile-butadiene rubber/PVC blends, epichlorohydrin, EPDM, chloroprene, EVA, ethylene acrylic elastomer "EA" and EVM. Preferably, the elastomer used in the cover is chlorinated polyethylene or a NBR/PVC blend. The thickness of the elastomeric cover 5 is obviously depends upon the desired properties of the hose and the elastomer that is used. Generally speaking, the thickness of the elastomeric cover 5 will range from 0.1 mm to 10 mm, with a range of from 0.5 mm to being 2.5 mm being preferred.

## Claims

1. A hose comprising
(a) an inner core (1) of a rubber layer containing hydrogenated acrylonitrile-butadiene rubber having a Mooney viscosity (M/L 1+4 at 100°C) ranging from 60 to 120;
(b) a layer (3) of tensioned reinforcement material disposed directly against the inner core (1); and
(c) an elastomeric cover (5),
**characterized in that** the rubber layer is free of magnesium oxide.

2. The hose of claim 1, **characterized in that** said hydrogenated acrylonitrile-butadiene rubber has a bound acrylonitrile content ranging from 20 to 45 percent.

3. The hose of claim 1, **characterized in that** said layer (3) of tensioned reinforcement material is selected from the group consisting of spiraled yarn, knitted yarn and braided yarn.

4. The hose of claim 1, **characterized in that** said elastomer that comprises said elastomeric cover (5) is selected from the group consisting of chlorosulfonated polyethylene, chlorinated polyethylene, acrylonitrile-butadiene rubber/PVC blends, epichlorohydrin, EPDM, chloroprene, EVA, ethylene acrylic elastomer and EVM.

5. The hose of claim 3 **characterized in that** said reinforcement material is from textile yarns of polyester, nylon, rayon and aramid.

6. The hose of claim 1, **characterized in that** the inside diameter of the inner core (1) ranges from 3 to 100 mm.

7. The hose of claim 1, **characterized in that** the diameter of the wall of the inner core (1) ranges from 0.1 to 8.0 mm.

8. The hose of claim 1, **characterized in that** the thickness of the elastomeric cover (5) ranges from 0.1 to 10 mm.

9. The hose of claim 1, **characterized in that** a carbon black is present in said rubber layer of the inner core (1) in an amount ranging from 5 to 200 phr.

10. The hose of claim 1, **characterized in that** there is no silica present in the rubber layer.

## Patentansprüche

1. Ein Schlauch, umfassend
(a) eine Innenseele (1) aus einer Gummischicht, die hydrierten Acrylnitril-Butadienkautschuk mit einer Mooney-Viskosität (M/L 1+4 bei 100°C) im Bereich von 60 bis 120 enthält;
(b) eine Schicht (3) angespannten Verstärkungsmaterials, die direkt gegen die Innenseele (1) angeordnet ist; und
(c) eine Elastomerdecke (5),
**dadurch gekennzeichnet, dass** die Gummischicht frei von Magnesiumoxid ist.

2. Der Schlauch von Anspruch 1, **dadurch gekennzeichnet, dass** besagter hydrierter Acrylnitril-Butadienkautschuk einen sich auf 20 bis 45 Prozent belaufenden Gehalt an gebundenem Acrylnitril hat.

3. Der Schlauch von Anspruch 1, **dadurch gekennzeichnet, dass** besagte Schicht (3) aus angespanntem Verstärkungsmaterial aus der aus spiralförmig gewundenem Garn, gewirktem Garn und geflochtenem Garn bestehenden Gruppe gewählt ist.

4. Der Schlauch von Anspruch 1, **dadurch gekennzeichnet, dass** besagtes Elastomer, das besagte Elastomerdecke (5) umfasst, aus der aus chlorsulfoniertem Polyethylen, chloriertem Polyethylen, Acrylnitril-Butadienkautschuk/PVC-Gemischen, Epichlorhydrin, EPDM, Chloropren, EVA, Ethylenacrylelastomer und EVM bestehenden Gruppe gewählt ist.

5. Der Schlauch von Anspruch 3, **dadurch gekennzeichnet, dass** besagtes Verstärkungsmaterial aus Textilgarnen aus Polyester, Nylon, Rayon und Aramid besteht.

6. Der Schlauch von Anspruch 1, **dadurch gekennzeichnet, dass** der Innendurchmesser der Innenseele (1) sich auf 3 bis 100 mm beläuft.

7. Der Schlauch von Anspruch 1, **dadurch gekennzeichnet, dass** der Durchmesser der Wand der Innenseele (1) sich auf 0,1 bis 8,0 mm beläuft.

8. Der Schlauch von Anspruch 1, **dadurch gekennzeichnet, dass** die Dicke der Elastomerdecke (5) sich auf 0,1 bis 10 mm beläuft.

9. Der Schlauch von Anspruch 1, **dadurch gekennzeichnet, dass** ein Carbon Black in besagter Gummischicht der Innenseele (1) in einer sich auf 5 bis 200 ThK belaufenden Menge vorhanden ist.

10. Der Schlauch von Anspruch 1, **dadurch gekennzeichnet, dass** kein Silika in der Gummischicht vorhanden ist.

## Revendications

1. Tuyau flexible comprenant :
(a) une partie centrale interne (1) constituée d'une couche de caoutchouc contenant du caoutchouc d'acrylonitrile-butadiène hydrogéné possédant une viscosité de Mooney (M/L 1+4 à 100 °C) se situant dans la plage de 60 à 120 ;
(b) une couche (3) constituée d'une matière de renforcement mise sous tension, disposée directement contre la partie centrale interne (1) ; et
(c) un recouvrement élastomère (5) ;
**caractérisé en ce que** la couche de caoutchouc est exempte d'oxyde de magnésium.

2. Tuyau flexible selon la revendication 1, **caractérisé en ce que** ledit caoutchouc d'acrylonitrile-butadiène hydrogéné possède une teneur en acrylonitrile lié dans la plage de 20 à 45 %.

3. Tuyau flexible selon la revendication 1, **caractérisé en ce que** ladite couche (3) de matière de renforcement mise sous tension est choisie parmi le groupe constitué par du fil enroulé en spirale, du fil tricoté et du fil tressé.

4. Tuyau flexible selon la revendication 1, **caractérisé en ce que** ledit élastomère que comprend ledit recouvrement élastomère (5) est choisi parmi le groupe constitué par du polyéthylène chlorosulfoné, du polyéthylène chloré, des mélanges homogènes de caoutchouc d'acrylonitrile-butadiène/PVC, de l'épichlorhydrine, du EPDM, du chloroprène, du EVA, un élastomère d'éthylène-acide acrylique et du EVM.

5. Tuyau flexible selon la revendication 3, **caractérisé en ce que** ledit renforcement est réalisé à partir de fils textiles de polyester, de nylon, de rayonne et d'aramide.

6. Tuyau flexible selon la revendication 1, **caractérisé en ce que** le diamètre interne de la partie centrale interne (1) se situe dans la plage de 3 à 100 mm.

7. Tuyau flexible selon la revendication 1, **caractérisé en ce que** le diamètre de la paroi de la partie centrale interne (1) se situe dans la plage de 0,1 à 8,0 mm.

8. Tuyau flexible selon la revendication 1, **caractérisé en ce que** l'épaisseur du recouvrement élastomère se situe de la plage de 0,1 à 10 mm.

9. Tuyau flexible selon la revendication 1, **caractérisé en ce que** du noir de carbone est présent dans ladite couche de caoutchouc de la partie centrale interne (1) en une quantité qui se situe dans la plage de 5 à 200 phr.

10. Tuyau flexible selon la revendication 1, **caractérisé en ce que** la silice est absente de la couche de caoutchouc.
